# EUROPEAN PATENT APPLICATION

(11) **EP 4 571 699 A1**
(43) Date of publication of application: **18.06.2025**
(21) Application number: 24212433.7
(22) Date of filing: 12.11.2024
(51) Int. Cl.: G08B 17/12, G08B 29/18

(54) **AN IMAGING-BASED FLAME DETECTION SYSTEM AND A METHOD THEREOF**

(30) Priority: 13.12.2023 IN 202311085054
(71) Applicant: Life Safety Distribution GmbH, 1180 Rolle (CH)
(72) Inventor: GANESH, Bindu Rani, Charlotte, 28202 (US); HANAGANDI, Sheetal, Charlotte, 28202 (US); VARTAK, Sameer Dinkar, Charlotte, 28202 (US); KOTHARI, Sanjay, Charlotte, 28202 (US); KHURANA, Mohit, Charlotte, 28202 (US); R, Ranjith Narayanan, Charlotte, 28202 (US)
(74) Representative: Haseltine Lake Kempner LLP

(57) **Abstract**

An imaging-based flame detection system is disclosed. The imaging-based flame detection system comprises at least one image capturing device to capture one or more images in a field of view (FOV). Each of the one or more images comprises an array of pixels. Further, one or more sensors are communicatively coupled to the at least one image capturing device and configured to analyze the FOV of captured one or more images. Further, the one or more processors are communicatively coupled to at least one image capturing device and one or more sensors. The one or more processors are configured to receive the one or more captured images; associate at least a portion of the array of pixels with a corresponding one or more zones; associate the corresponding one or more zones with a criticality level and determine a status based at least on the analyzed FOV and the criticality level.

## Description

### TECHNOLOGICAL FIELD

An example embodiment relates generally to flame detection systems and, more particularly, to an imaging-based flame detection system and method.

### BACKGROUND

Flame detection systems are point detectors that use single pixel non-imaging detectors to collect light from all directions within a field of view (FOV) and subsequently utilize multiple algorithms to identify flames, false alarms, or flame in presence of a false alarm. However, in industrial environments, essential flames like flare are often present, necessitating cautious installation practices to prevent bringing flares in the FOV. Moreover, certain regions within the FOV hold more significance for flame detection than other regions. Some areas require highly precise flame detection, while in some areas flame detection is not so critical. Current flame detection systems lack the capability to assign preferential or fine-tuned weighting to different FOV areas due to the non-imaging nature of the systems. Such systems inhibit the ease of installation and compromises the accuracy of flame categorization, as well as the ability to mitigate false alarms or enhance flame detection. Therefore, a need remains for an imaging-based flame detection system that can facilitate simplified installation procedures, improved flame classification, and more effective suppression of false alarms, and ultimately leading to enhanced flame detection capabilities.

Applicant has identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### BRIEF SUMMARY OF THE INVENTION

The following presents a summary of some example embodiments to provide a basic understanding of some aspects of the present disclosure. This summary is not an extensive overview and is intended to neither identify key or critical elements nor delineate the scope of such elements. It will also be appreciated that the scope of the disclosure encompasses many potential embodiments in addition to those here summarized, some of which will be further described in the detailed description that is presented later.

In an example embodiment, an imaging-based flame detection system is disclosed. The imaging-based flame detection system comprises at least one image capturing device configured to capture one or more images in a field of view (FOV). Each of the one or more images comprises an array of pixels. Further, the imaging-based flame detection system comprises one or more sensors which are communicatively coupled to the at least one image capturing device. The one or more sensors are configured to analyze the FOV of the captured one or more images. The imaging-based flame detection system further comprises one or more processors communicatively coupled to the at least one image capturing device and the one or more sensors. The one or more processors are configured to receive the one or more captured images; associate at least a portion of the array of pixels with a corresponding one or more zones; and associate the corresponding one or more zones with a criticality level. Thereafter, the one or more processors are configured to determine a status based at least on the analyzed FOV of the captured one or more images and the criticality level of the corresponding one or more zones.

In some embodiments, the one or more sensors are one or more infrared (IR) sensors, flame sensors, or photodiodes.

In some embodiments, the criticality level of each respective zone of the one or more zones is non-critical, critical, or highly critical.

In some embodiments, the status indicates presence of a flame or smoke in the corresponding one or more zones. Further, the non-critical zone corresponds to a zone with an expected flame, the critical zone corresponds to a zone with a possible non-critical flame, and the highly critical zone corresponds to a zone with a possible unexpected flame.

In some embodiments, the one or more processors are configured to generate a first signal upon detecting an unexpected flame within the highly critical zone and transmit the first signal to a communication device. In some embodiments, the communication device is configured to generate an audible information for a user to signal the presence of the unexpected flame within the highly critical zone.

In some embodiments, the one or more processors are configured to generate a second signal upon detecting a non-critical flame within the critical zone and transmit the second signal to a communication device. In some embodiments, the communication device generates a notification for the user to signal the presence of the non-critical flame within the critical zone.

In some embodiments, the one or more processors are configured to generate a third signal upon detecting the smoke within the non-critical zone and transmit the third signal to a communication device. In some embodiments, the communication device generates an audible information for the user to signal the presence of smoke within the non-critical zone.

In some embodiments, the one or more processors are configured to analyze the FOV by evaluating the arrays of pixels of the at least one image capturing device and the one or more sensors to determine the status.

In some embodiments, the at least one image capturing device and the one or more sensors are spatially calibrated to analyze the flame within the FOV of the captured one or more images.

In some embodiments, the one or more processors are configured to re-assign different criticality levels to the one or more zones during an operation of the imaging-based flame detection system.

In another example embodiment, an imaging-based flame detection method is disclosed. The imaging-based flame detection method comprises steps of capturing, via at least one image capturing device, one or more images in a field of view (FOV). Each of the one or more images comprises an array of pixels. Further, the imaging-based flame detection method comprises steps of analyzing, via one or more sensors, the FOV of the captured one or more images; receiving, via one or more processors, the one or more captured images; associating, via the one or more processors, at least a portion of an array of pixels with a corresponding one or more zones; associating, via the one or more processors, the corresponding one or more zones with a criticality level; and determining, via the one or more processors, a status based at least on the analyzed FOV of the captured one or more images and the criticality level of the corresponding one or more zones.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the present disclosure in any way.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 illustrates an example embodiment of an imaging-based flame detection system, in accordance with an example embodiment of the present disclosure;
FIG. 2 illustrates one or more zones of captured one or more images, in accordance with an example embodiment of the present disclosure;
FIG. 3 illustrates simulated outcomes of the imaging-based flame detection system, in accordance with an example embodiment of the present disclosure;
FIG. 4 illustrates a flowchart showing steps of a method of the imaging-based flame detection system, in accordance with an example embodiment of the present disclosure;
FIG. 5 illustrates a flowchart showing steps of a method of generating a first signal upon detecting an unexpected flame within the highly critical zone, in accordance with an example embodiment of the present disclosure;
FIG. 6 illustrates a flowchart showing steps of a method of generating a second signal upon detecting a non-critical flame within the critical zone, in accordance with an example embodiment of the present disclosure; and
FIG. 7 illustrates a flowchart showing steps of a method of generating a third signal upon detecting the smoke within the non-critical zone, in accordance with an example embodiment of the present disclosure.

### DETAILED DESCRIPTION

Some embodiments will now be described more fully hereinafter with reference to the accompanying drawings, in which some, but not all, embodiments of the present disclosure are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of systems and methods of imaging-based flame detection. Embodiments may be configured to detect flame based on different sensitivity assigned to different zones of a field of view. Embodiments may offer high-resolution thermal imaging to enable precise and early identification of flames. Embodiments may detect subtle temperature changes and spatial variations to allow for quick and accurate flame localization, reducing false alarms and enhancing safety in critical environments. Embodiments may provide real-time monitoring capability to ensure immediate response to flame outbreaks, facilitating rapid intervention and minimizing potential damage. Additionally, embodiments may be integrated into various settings, from industrial facilities to fire detection systems, providing robust and reliable flame detection solutions for improved fire safety and reduced risks to life and property.

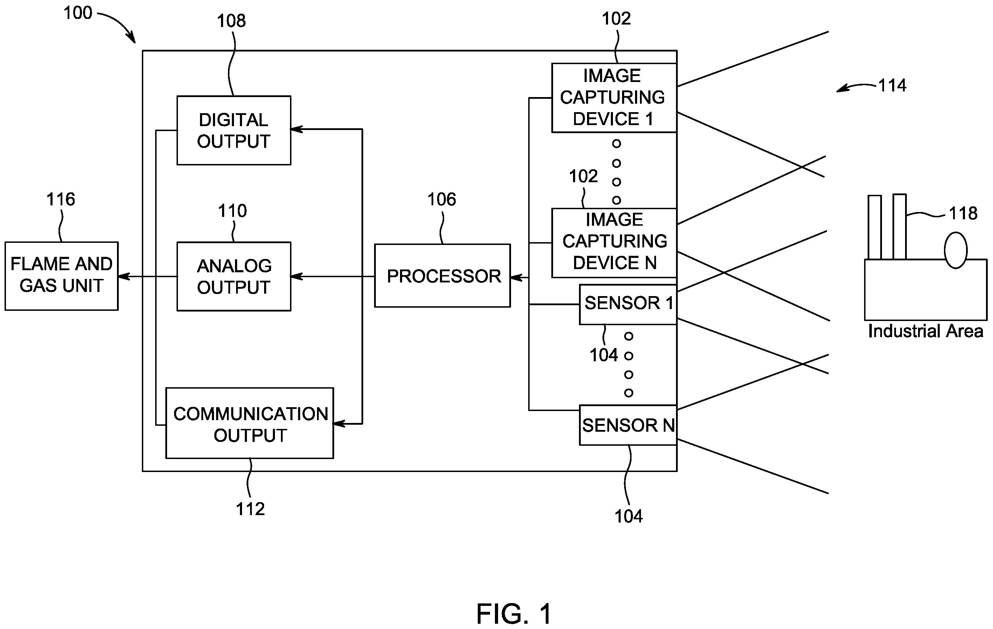

FIG. 1 illustrates an example embodiment of an imaging-based flame detection system 100, in accordance with an example embodiment of the present disclosure. The imaging-based flame detection system 100 may comprise at least one image capturing device 102, one or more sensors 104, one or more processors 106, at least one digital output 108, at least one analog output 110, and at least one communication output 112.

In some embodiments, the at least one image capturing device 102 may capture one or more images in a field of view (FOV) 114. The one or more images may include precise recording of scenes or subjects in the FOV 114. It may be noted that the FOV 114 may correspond to an observable area that an individual may visualize via the at least one image capturing device 102. In some embodiments, the at least one image capturing device 102 may include at least one of a multi-pixel digital camera or a dual infrared (IR) camera. The at least one image capturing device 102 may include various capturing modes and storage options. The at least one image capturing device 102 may enable sharing of visual data in the form of captured one or more images. Further, each of the one or more images may comprise an array of pixels. In some embodiments, each pixel from the array of pixels may be an individual picture element that makes up the visual content of the captured one or more images.

As discussed above, the imaging-based flame detection system 100 may comprise the one or more sensors 104. The one or more sensors 104 may be communicatively coupled to the at least one image capturing device 102. In some embodiments, the one or more sensors 104 may include one or more infrared (IR) sensors, flame sensors, or photodiodes. The one or more sensors 104 may be configured to analyze the FOV 114 of the captured one or more images. The one or more sensors 104 may detect and measure thermal radiation or infrared (IR) emissions from the FOV 114.

In some embodiments, the at least one image capturing device 102 and the one or more sensors 104 may be spatially calibrated to analyze the flame within the FOV 114 of the captured one or more images. Such spatial calibration may ensure that each pixel from the array of pixels may have the same or nearly the same FOV 114. In some embodiments, the flame may be detected by analyzing pixel to pixel from the array of pixels. It will be apparent to one skilled in the art that the at least one image capturing device 102 and the one or more sensors 104 may be spatially calibrated by correlating one or more stored images against known values and then apply the calibration to non-calibrated one or more real-time images. In some embodiments, the same FOV 114 of the array of pixels may be ensured by removing parallax and different orientations of the captured one or more images. It may be noted that the one or more images may be captured in real-time.

In some embodiments, the spatial calibration may include the process of aligning and synchronizing data from the at least one image capturing device 102 and the one or more sensors 104 to accurately study the flame's characteristics within the FOV 114. In one example, a dual IR camera and an IR sensor may be spatially calibrated to precisely locate and measure the temperature of a flame within the FOV 114. Further, the spatial calibration may ensure that the one or more images captured by the at least one image capturing device 102 and the thermal radiation or infrared (IR) emissions detected and measured from the captured one or more images by the one or more sensors 104 data correspond to the same region of interest, and thus allow for accurate flame detection.

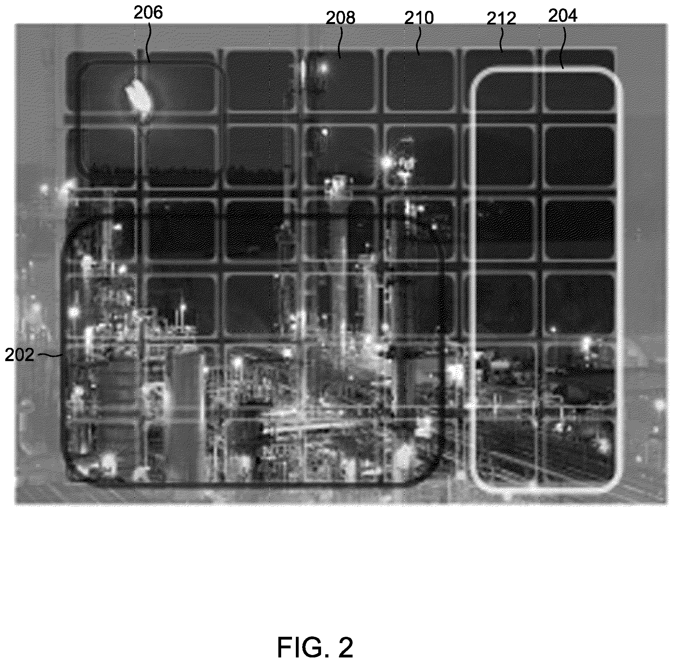

The imaging-based flame detection system 100 may further comprise the one or more processors 106. The one or more processors 106 may be communicatively coupled to the at least one image capturing device 102 and the one or more sensors 104. Further, the one or more processors 106 may receive the one or more captured images. Further, the one or more processors 106 may be configured to associate at least one portion of the array of pixels with a corresponding one or more zones. The one or more zones may include zones with an expected flame/ smoke, a possible non-critical flame, or a possible unexpected flame, within the FOV 114. The one or more zones may be assigned to the at least one portion of the array of pixels based at least on a criticality level. In some embodiments, the criticality level of each respective zone of the one or more zones may include non-critical, critical, or highly critical. Therefore, the one or more zones may be categorized into a highly critical zone (not shown), a critical zone (not shown), and a non-critical zone (not shown). It may be noted that the at least one portion of the array of pixels may be associated with the corresponding one or more zones using Artificial Intelligence (AI), Machine Learning (ML), or historical data. The one or more zones may be described in greater detail in the later part of the detailed description in conjunction with FIG. 2.

In some embodiments, the one or more processors 106 may be configured to determine a status based at least on the analyzed FOV 114 of the captured one or more images and the criticality level of the one or more zones. In some embodiments, the status may indicate a presence of a flame or smoke in the one or more zones. Further, the one or more processors 106 may be configured to analyze the FOV 114 by evaluating the arrays of pixels of the at least one image capturing device 102 and the one or more sensors 104 to determine the status.

In various examples, the one or more processors 106 may include suitable logic, circuitry, and/or interfaces that are operable to execute one or more instructions stored in a memory (not shown) to perform predetermined operations. In some embodiments, the one or more processors 106 may be configured to decode and execute any instructions received from one or more other electronic devices or server(s). The one or more processors 106 may be configured to execute one or more computer-readable program instructions, such as program instructions to carry out any of the functions described in this description. Further, the one or more processors 106 may be implemented using one or more processor technologies known in the art. Examples of the processor include, but are not limited to, one or more general purpose processors (e.g., INTEL^{®} or Advanced Micro Devices^{®} (AMD) microprocessors) and/or one or more special purpose processors (e.g., digital signal processors or Xilinx^{®} System On Chip (SOC) Field Programmable Gate Array (FPGA) processor).

Further, the memory may store a set of instructions and data. In some embodiments, the memory may include the one or more instructions that are executable by the processor to perform specific operations. It is apparent to a person with ordinary skill in the art that the one or more instructions stored in the memory enable the hardware of the system to perform the predetermined operations. Some of the commonly known memory implementations include, but are not limited to, fixed (hard) drives, magnetic tape, floppy diskettes, optical disks, Compact Disc Read-Only Memories (CD-ROMs), and magneto-optical disks, semiconductor memories, such as ROMs, Random Access Memories (RAMs), Programmable Read-Only Memories (PROMs), Erasable PROMs (EPROMs), Electrically Erasable PROMs (EEPROMs), flash memory, magnetic or optical cards, or other type of media/machine-readable medium suitable for storing electronic instructions.

The imaging-based flame detection system 100 may further include the at least one digital output 108. The at least one digital output 108 may be coupled to the one or more processors 106. The at least one digital output 108 may generate temperature-related information in a discrete digital format. In some embodiments, the at least one digital output 108 may exist in binary form, representing temperature states as 1s and 0s. The temperature states may be easily processed and interpreted by digital devices such as microcontrollers, computers, or data acquisition systems. In some embodiments, the at least one digital output 108 may include a relay (not shown). Further, the at least one digital output 108 may allow precise temperature monitoring, triggering alarms, and data storage. Further, the at least one digital output 108 may be integrated with a flame and gas unit 116.

The imaging-based flame detection system 100 may further include the at least one analog output 110. The at least one analog output 110 may be coupled to the one or more processors 106. The at least one analog output 110 may be in the form of voltage or current. The at least one analog output 110 may provide a continuous representation of temperature to enable real-time monitoring and analysis. In some embodiments, a level of the at least one analog output 110 may correspond to the detected temperature. Further, the at least one analog output 110 may be integrated with the flame and gas unit 116.

The imaging-based flame detection system 100 may further include the at least one communication output 112. The at least one communication output 112 may be coupled to the one or more processors 106. The at least one communication output 112 may facilitate data transmission. In some embodiments, the at least one communication output 112 may include Highway Addressable Remote Transducer (HART), Modbus, TCP/IP. Further, the at least one communication output 112 may enable seamless connectivity between the imaging-based flame detection system 100 and other monitoring and control devices. In some embodiments, the other monitoring and control devices may include supervisory control and data acquisition (SCADA) systems, PLCs (Programmable Logic Controllers).

In an example embodiment, the HART provides a hybrid analog and digital signal, to allow real-time measurement data and device diagnostics over a single pair of wires. In another example embodiment, the Modbus is a widely adopted serial communication protocol that allows for easy data exchange between multiple devices, making it suitable for industrial applications. In another example embodiment, the TCP/IP is a standard internet protocol suite that extends connectivity beyond the local network to enable remote monitoring and control of the imaging-based flame detection system 100. In some embodiments, the at least one communication output 112 may be integrated with the flame and gas unit 116.

In various examples, the imaging-based flame detection system 100 may be installed near an environment 118. In some embodiments, the environment 118 may be a fire prone area and/or an area where fire is used in manufacturing or processing of products or substances, like, chemical processing plants or industrial petroleum sites. It will be apparent to one skilled in the art that the fire prone area is an area where fires are most likely to occur or have a higher tendency to occur.

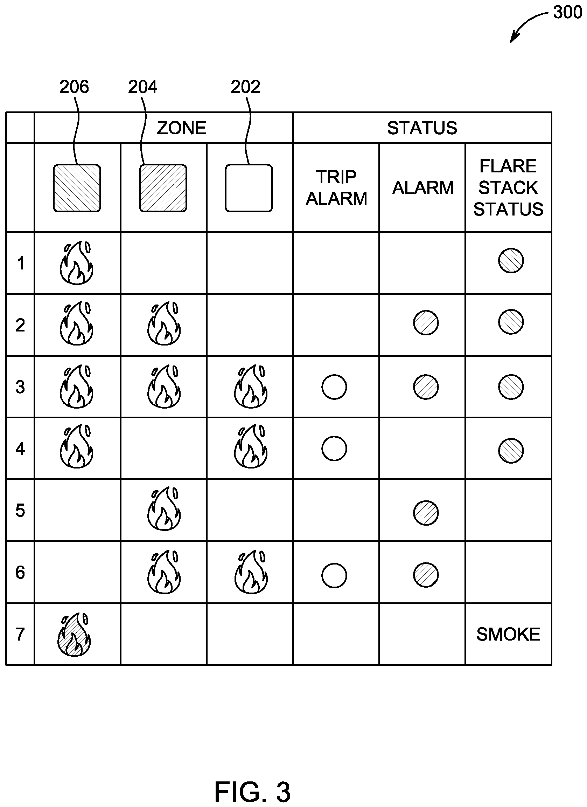

FIG. 2 illustrates the one or more zones of the captured one or more images, in accordance with an example embodiment of the present disclosure. FIG. 3 illustrates simulated outcomes 300 of the imaging-based flame detection system 100, in accordance with an example embodiment of the present disclosure. FIGS. 2 and 3 are described in conjunction with FIG. 1.

As discussed above, the one or more processors 106 may be configured to associate the one or more zones with the criticality level. Further, the criticality level of each respective zone of the one or more zones may include highly critical, critical, or non-critical. Therefore, the one or more zones may be categorized into a highly critical zone 202, a critical zone 204, and a non-critical zone 206. Further, the at least one portion of the array of pixels may be associated with the corresponding one or more zones. The array of pixels may include pixels 208, 210, 212 and so on.

In some embodiments, the highly critical zone 202 may correspond to a zone with a possible unexpected flame. Stated differently, the highly critical zone 202 may correspond to a zone where a flame is not desired or expected to be. In some embodiments, the highly critical zone 202 may include important infrastructure present in the captured one or more images in the FOV 114 in which the flame may not be expected. For example, the one or more processors 106 associates a portion N11 to N12 by M11 to M12 of the array of pixels of the captured one or more images as highly critical zone 202.

Further, the one or more processors 106 may be configured to generate a first signal upon detecting the unexpected flame within the highly critical zone 202. Further, the first signal may be transmitted to a communication device (not shown). In some example embodiments, the communication device may include an electronic device or electromechanical device that may be actuated automatically when a signal is received from the one or more processors 106. In some embodiments, the communication device may have a wireless or wired connections to the one or more processors 106.

In some embodiments, the critical zone 204 may correspond to a zone with a possible non-critical flame. Stated differently, the critical zone 204 may correspond to a zone where a flame is not expected, but the existence of the flame is not critical (e.g., dangerous) to the particular region of the environment 118. In some embodiments, the critical zone 204 may include a region with the non-critical flame present in the captured one or more images in the FOV 114. For example, the one or more processors 106 associates a portion N21 to N22 by M21 to M22 of the array of pixels of the captured one or more images as critical zone 204 as a region may exist within the associated portion in which the flame is possible to exist and is not-critical to the region.

Further, the one or more processors 106 may be configured to generate a second signal upon detecting the non-critical flame within the critical zone 204. Further, the second signal may be transmitted to the communication device.

In some embodiments, the non-critical zone 206 may correspond to a zone with an expected flame. Stated differently, the non-critical zone 206 may correspond to a zone where a flame is expected and desired. For example, the flame may be necessary for the operation of the environment 118. In some embodiments, the non-critical zone 206 may include a region with the expected flame present in the captured one or more images in the FOV 114. In some embodiments, the non-critical zone 206 may further include a region with the smoke present in the captured one or more images in the FOV 114. For example, the one or more processors 106 associates a portion N31 to N32 by M31 to M32 of the array of pixels of the captured one or more images as the non-critical zone 206 as a region may exist within the associated portion in which the flame is expected or the smoke is detected.

Further, the one or more processors 106 may be configured to generate a third signal upon detecting the expected flame or smoke within the non-critical zone 206. Further, the third signal may be transmitted to the communication device. In some examples, the third signal is an indication of the flare stack status (i.e., that the flare stack is operating normally).

In some embodiments, the one or more processors 106 may be configured to re-assign different criticality levels to the one or more zones during an operation of the imaging-based flame detection system 100. In some embodiments, during the operation of the imaging-based flame detection system 100, the one or more processors 106 may intelligently and dynamically modify different criticality levels to the one or more zones. The modification may be based on real-time data, or changing conditions. Essentially, the one or more processors 106 may allow the imaging-based flame detection system 100 to adapt and allocate the resources, attention, or responses differently to the one or more zones as needed, enhancing the overall flexibility and effectiveness in heat detection and response tasks. In some embodiments, the communication device, based on the received first signal, second signal, or third signal, may generate an audible information or a notification (e.g., a visual indication) to a user to indicate the presence of flame or smoke in the one or more zones.

In some embodiments, the simulated outcomes 300 may provide the presence of the flame or smoke in the one or more zones. The simulated outcomes 300 may include a column representing zones. The zones include highly critical zone 202, critical zone 204, and non-critical zone 206. Further, the simulated outcomes 300 may comprise a column representing a status. The status may include Trip alarm (i.e., the alarm necessitates the stoppage of the operation for safety criticality), Alarm (i.e., a low level alert for notification only and may be acted upon only if necessary and does not imply stoppage of the operation), and Flare stack status. Further, the simulated outcomes 300 may provide results of simulations of the imaging-based flame detection system 100 conducted under controlled conditions. In some embodiments, the simulated outcomes 300 may include the flames detected in the one or more zones by the imaging-based flame detection system 100. Further, the simulated outcomes 300 may include the signal generated based on the flames or smoke detected in one or more zones.

In one example embodiment, when the flame is detected only in the non-critical zone 206, the third signal may be generated and transmitted to the communication device. The communication device may generate the audible information or notification for the user to indicate the presence of the flame within the non-critical zone 206 which will be represented under the flare stack status. The audible information or notification may include the information about flame and may provide instruction to the user to not take any action as the flame may be expected in the non-critical zone 206. In some embodiments, the audible information or notification may include an alarm/buzzer or a voice message. In various examples, when the flame is detected only in the non-critical zone 206, the communication device does not generate audible information for the user. Also, when the flame is detected only in the non-critical zone 206, an indication of the flare stack status (i.e., that the flare stack is operating normally) may be provided.

In another example embodiment, when the flame is detected in the critical zone 204 and the non-critical zone 206, the second signal and the third signal may be generated and transmitted to the communication device which will be represented under the alarm (LA) and the flare stack status. The communication device may generate a notification for the user based on the second signal to indicate the presence of the flame within the critical zone 204. The notification may provide instruction to the user to take any action depending upon the flame as the flame is not-critical and possible in the critical zone 204. In some embodiments, the notification may include a text message or a voice message. Further, the communication device may generate the audible information or notification for the user based on the third signal to indicate the presence of the flame within the non-critical zone 206. The audible information or notification may provide instruction to the user to not take any action as the flame is expected in the non-critical zone 206.

In another example embodiment, when the flame is detected in the highly critical zone 202, the critical zone 204 and the non-critical zone 206, the first signal, the second signal and the third signal may be generated and transmitted to the communication device which will be resented under the flare stack status, the alarm (LA) and the trip alarm (HH). The communication device may generate the audible information or notification for the user based on the first signal to indicate the presence of the flame within the highly critical zone 206. The audible information or notification may provide instruction to the user to take immediate action as the detected flame is unexpected in the highly critical zone 202. Similarly, the communication device may generate the notification for the user based on the second signal to indicate the presence of the flame within the critical zone 204. The notification may provide instruction to the user to take any action depending upon the flame as the flame is not-critical and possible in the critical zone 204. As discussed above, the communication device may generate the audible information or notification for the user based on the third signal to indicate the presence of the flame within the non-critical zone 206. The audible information or notification may provide instruction to the user to not take any action as the flame is expected in the non-critical zone 206.

In another example embodiment, when the flame is detected in the highly critical zone 202 and the non-critical zone 206, the first signal and the third signal may be generated and transmitted to the communication device which will be represented under the flare stack status and the trip alarm (HH). The communication device may generate the audible information or notification for the user based on the first signal to indicate the presence of the flame within the highly critical zone 206. The audible information or notification may provide instruction to the user to take immediate action as the detected flame is unexpected in the highly critical zone 202. Further, the communication device may generate the audible information or notification for the user based on the third signal to indicate the presence of the flame within the non-critical zone 206. The audible information or notification may provide instruction to the user to not take any action as the flame is expected in the non-critical zone 206.

In another example embodiment, when the flame is detected in the critical zone 204, such as detected only in the critical zone 204, the second signal may be generated and transmitted to the communication device which will be represented under the alarm (LA). The communication device may generate the notification for the user based on the second signal to indicate the presence of the flame within the critical zone 204. The notification may provide instruction to the user to take any action depending upon the flame as the flame is not-critical and possible in the critical zone 204.

In another example embodiment, when the flame is detected in the highly critical zone 202 and the critical zone 204, the first signal and the second signal may be generated and transmitted to the communication device which will be represented under the alarm (LA) and the trip alarm (HH). The communication device may generate the audible information or notification for the user based on the first signal to indicate the presence of the flame within the highly critical zone 206. The audible information or notification may provide instruction to the user to take immediate action as the detected flame is unexpected in the highly critical zone 202. Further, the communication device may generate the notification for the user based on the second signal to indicate the presence of the flame within the critical zone 204. The notification may provide instruction to the user to take any action depending upon the flame as the flame is not-critical and possible in the critical zone 204.

In another example embodiment, when the smoke may be detected only in the non-critical zone 206, the third signal may be generated and transmitted to the communication device. Further, the communication device may generate the audible information or notification for the user to signal the presence of the smoke within the non-critical zone 206. The audible information or notification may include the information about the smoke and may provide instruction to the user to not take any action as the smoke may be expected in the non-critical zone 206.

It will be apparent that the detection of the one or more zones and execution of further processing steps may be performed by the one or more processors 106 of the imaging-based flame detection system 100 using the at least one image capturing device 102 and the one or more sensors 104, without departing from the scope of the disclosure.

In the various embodiments, the corresponding one or more zones may be of any shape chosen by the user using a Graphical User Interface (GUI) (not shown) or any other input device. The shape may include rectangular shape, square shape, circular shape, cloud shape, triangular shape, or any other shape that do not conform to typical geometric patterns. In various examples, a user may choose a shape for a zone based on knowledge of the infrastructure of the environment 118. As an example, if the environment 118 is an industrial petroleum site, the user may recognize a flare stack that is used for processing petroleum in the one or more images in the FOV 114. The user may also know that fire frequently and expectedly protrudes from the flare stack when the industrial petroleum site is processing petroleum. As such, the user may draw a shape around the flare stack and subsequently assign the zone as a non-critical zone because a flame is expected in that zone.

In the disclosed embodiments, the imaging-based flame detection system 100 may employ various image processing techniques known in the art to analyze the FOV 114 of the captured one or more images.

It will be apparent that the above-mentioned components of the imaging-based flame detection system 100 have been provided only for illustration purposes. In another embodiment, the imaging-based flame detection system 100 may include other components such as a controller unit, a microprocessor unit (MPU), a microcontroller unit (MCU), etc. without departing from the scope of the disclosure.

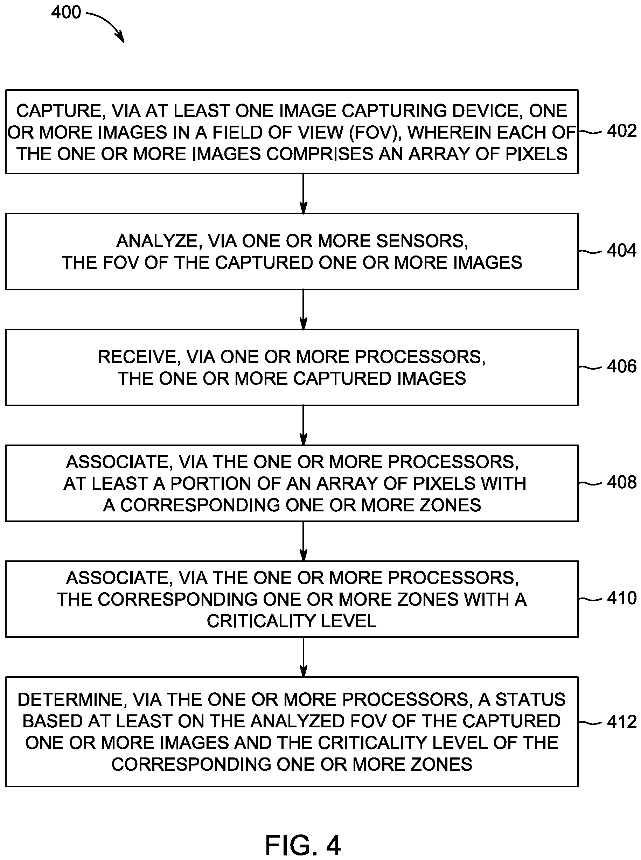

FIG. 4 illustrates a flowchart of a method 400 of the imaging-based flame detection system 100, in accordance with an example embodiment of the present disclosure. FIG. 4 is described in conjunction with FIGS. 1-3.

At first, the method includes, the one or more images are captured in the field of view (FOV) 114 via the at least one image capturing device 102, at step 402. As discussed, each of the one or more images comprises an array of pixels. In some embodiments, each pixel from the array of pixel is an individual picture element that make up the visual content of the captured one or more images. For example, a dual IR camera may capture one or more images of an industrial area within the FOV 114, and each image from the captured one or more images may comprise an array of pixels, representing the details and information captured by the dual IR camera.

Successively, the FOV 114 of the captured one or more images are analyzed via the one or more sensors 104, at step 404. In some embodiments, the one or more sensors 104 may include one or more infrared (IR) sensors, flame sensors, or photodiodes. The one or more sensors 104 may capture and measure thermal radiation or infrared (IR) emissions to detect flames in the captured one or more images. It should be noted that the at least one image capturing device 102 and the one or more sensors 104 may be spatially calibrated to analyze the flame within the FOV 114 of the captured one or more images. Further, the spatial calibration may ensure each pixel from the array of pixels have same or nearly same FOV 114. For example, after capturing one or more images of the industrial area, one or more flame sensors may detect the presence of flames within the FOV 114 by analyzing each pixel from the array of pixels.

Successively, the one or more captured images are received via the one or more processors 106, at step 406. For example, the one or more processors 106 may perform tasks like object detection, or image enhancement on the captured one or more images to detect objects, track movements, or enhance image quality to accurately identify flames or smoke in the captured one or more images of the industrial area.

Successively, at least a portion of an array of pixels are associated with the corresponding one or more zones via the one or more processors 106, at step 408. In an example embodiment, a corresponding zone may include an important infrastructure of, for example, an environment 118. In another example embodiment, a corresponding zone may include a region in which flame may exist, and is expected to be, and is not critical to the region. In another example embodiment, a zone may include a region in which a flame is expected, such as a necessary flame for operation of the environment, such as a flare stack. Further, the region may include a smoke. For example, in the captured one or more images of the industrial area, the one or more processors 106 may associate a zone with an important infrastructure, another zone with a possible non-critical flame and yet another zone with the expected flame or smoke.

Successively, the corresponding one or more zones are associated with the criticality level, at step 410 via the one or more processors 106. As discussed earlier, the criticality level of each respective zone of the one or more zones may include non-critical, critical, or highly critical. For example, the one or more processors 106 may associate the zone of important infrastructure with the criticality level of highly critical and thus, the zone may be identified as the highly critical zone 202. Further, another zone with a possible non-critical flame may be associated with the criticality level of critical zone and thus, the another zone may be identified as the critical zone 204. Further, yet another zone with the expected flame or smoke may be associated with a criticality level of non-critical and thus, the yet another zone may be identified as the non-critical zone 206.

Successively, a status is determined based at least on the analyzed FOV 114 of the captured one or more images and the criticality level of the corresponding one or more zones via the one or more processors 106, at step 412. In some embodiments, the status may indicate presence of the flame or smoke in the corresponding one or more zones. Further, the one or more processors 106 may be configured to analyze the FOV by evaluating the arrays of pixels of the at least one image capturing device and the one or more sensors to determine the status. For example, based on the analyzed FOV 114 of the captured one or more images of the industrial area and the highly critical zone 202 of the industrial area, the one or more processors 106 may detect the flame and determine the status indicating the presence of flame in the important infrastructure of the highly critical zone 202.

It will be appreciated that the method 400 may be implemented by one or more the embodiments disclosed herein, which may be combined or modified as desired or needed. Additionally, the steps in the method 400 may be modified, changed in order, performed differently, performed sequentially, concurrently or simultaneously, or otherwise modified as desired or needed.

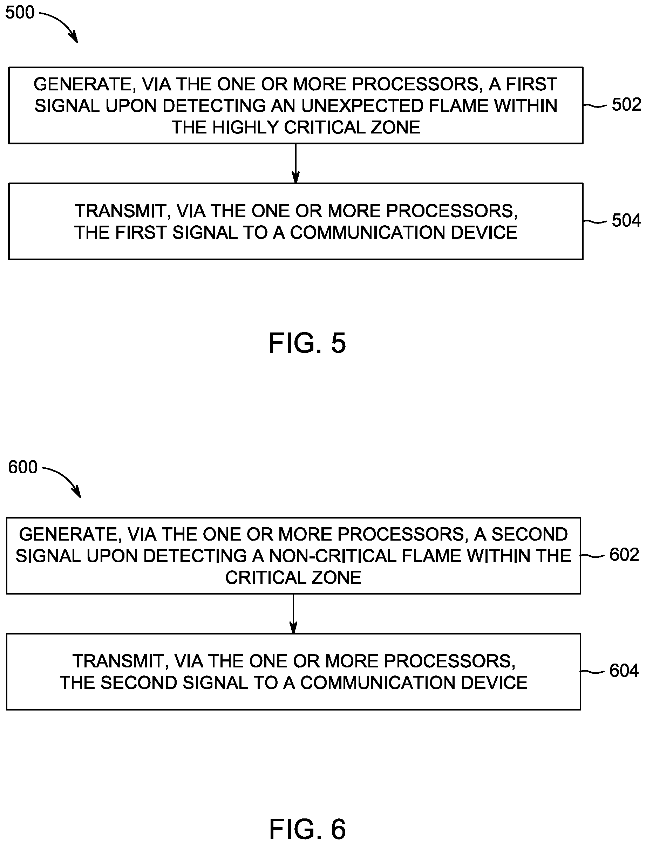

FIG. 5 illustrates a flowchart showing steps of a method 500 of generating the first signal upon detecting the unexpected flame within the highly critical zone 202, in accordance with an example embodiment of the present disclosure.

At first, the first signal is generated via the one or more processors 106 upon detecting the unexpected flame within the highly critical zone 202, at step 502. In some embodiments, when the flame may be detected in the highly critical zone 202, the first signal may be generated. For example, the first signal may trigger a series of actions, such as sounding alarms or providing visual indications of the first signal.

Successively, the first signal is transmitted to a communication device via the one or more processors 106, at step 504. As described earlier, the communication device generates the audible information or notification for the user to signal the presence of the unexpected flame within the highly critical zone. In some embodiments, the generated first signal may be transmitted to the communication device to generate the audible information or notification to indicate the presence of unexpected flame. For example, the audible information or notification may provide instruction to the user to take immediate action as the detected flame is unexpected in the highly critical zone 202.

FIG. 6 illustrates a flowchart showing steps of a method 600 of generating a second signal upon detecting a non-critical flame within the critical zone 204, in accordance with an example embodiment of the present disclosure.

At first, the second signal is generated via the one or more processors 106 upon detecting the non-critical flame within the critical zone 204, at step 602. In some embodiments, when the flame may be detected in the critical zone 204, the second signal may be generated. For example, the second signal may trigger a series of actions, such as alerting the emergency response team.

Successively, the second signal is transmitted to the communication device via the one or more processors 106, at step 604. As described earlier, the communication device generates the notification for the user to signal the presence of the non-critical flame within the critical zone 204. In some embodiments, the generated second signal may be transmitted to the communication device to generate the notification to indicate the presence of non-critical flame. For example, the notification may provide instruction to the user to take any action depending upon the flame as the flame is not-critical and possible in the critical zone 204.

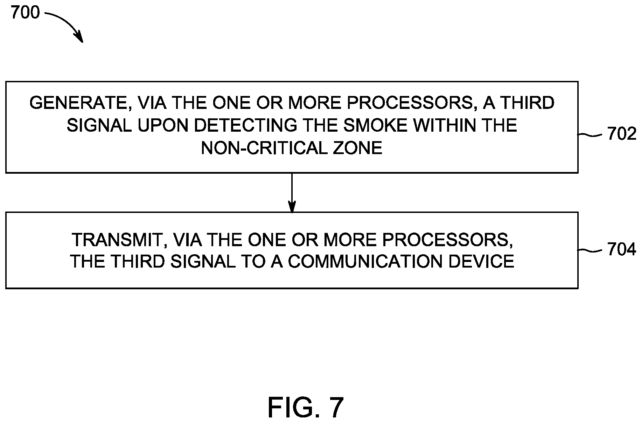

FIG. 7 illustrates a flowchart showing steps of a method 700 of generating the third signal upon detecting the smoke within the non-critical zone 206, in accordance with an example embodiment of the present disclosure.

At first, the third signal is generated via the one or more processors upon detecting the smoke within the non-critical zone, at step 702. In some embodiments, when the smoke may be detected in the non-critical zone 206, the third signal may be generated. For example, the third signal may or may not trigger a series of actions as the smoke detected in expected in the non-critical zone 206.

Successively, the third signal is transmitted to the communication device via the one or more processors, at step 704. As described earlier, the communication device generates the audible information or notification for the user to indicate the presence of smoke within the non-critical zone. In some embodiments, the generated third signal may be transmitted to the communication device to generate the audible information or notification to indicate the presence of smoke. For example, the audible information or notification may include the information about the smoke and may provide instruction to the user to not take any action as the smoke is expected in the non-critical zone 206.

In some alternate embodiments, a flame may be detected in the non-critical zone 206. Further, the generated third signal may be transmitted to the communication device to generate the audible information or notification to indicate the presence of flame. For example, the audible information or notification may include the information about the flame and may provide instruction to the user to not take any action as the flame may be expected in the non-critical zone 206. In some embodiments, the audible information or notification may not be generated as the smoke or the flame is expected in the non-critical zone 206 and no necessary action is needed.

It will be apparent to one skilled in the art that the above-mentioned embodiments of the present invention may be executed by the one or more processors 106 of the imaging-based flame detection system 100 and the method(s) 400, 500, 600, 700 using the at least one image capturing device 102 and the one or more sensors 104, without departing from the scope of the disclosure.

In some embodiments, the imaging-based flame detection system 100 may prevent false alarms within a specific field of view. Further, the imaging-based flame detection system 100 by using AI/MI, may automatically assign criticality level to each of the one or more zones and accordingly generate one or more alarm for the user. Further, imaging-based flame detection system 100 may accurately determine presence of flame and/or smoke within the field of view along with exempting flames or smoke that are non-critical (required).

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An imaging-based flame detection system comprising:
at least one image capturing device configured to capture one or more images in a field of view (FOV), wherein each of the one or more images comprises an array of pixels;
one or more sensors communicatively coupled to the at least one image capturing device, configured to analyze the FOV of the captured one or more images; and
one or more processors communicatively coupled to the at least one image capturing device and the one or more sensors, the one or more processors configured to:
receive the one or more captured images;
associate at least a portion of the array of pixels with a corresponding one or more zones;
associate the corresponding one or more zones with a criticality level; and
determine a status based at least on the analyzed FOV of the captured one or more images and the criticality level of the corresponding one or more zones.

2. The imaging-based flame detection system of claim 1, wherein the one or more sensors are one or more infrared (IR) sensors, flame sensors, or photodiodes.

3. The imaging-based flame detection system of claim 1, wherein the criticality level of each respective zone of the one or more zones is non-critical, critical, or highly critical.

4. The imaging-based flame detection system of claim 3, wherein the status indicates presence of a flame or smoke in the corresponding one or more zones.

5. The imaging-based flame detection system of claim 4, wherein the non-critical zone corresponds to a zone with an expected flame, the critical zone corresponds to a zone with a possible non-critical flame, and the highly critical zone corresponds to a zone with a possible unexpected flame.

6. The imaging-based flame detection system of claim 5, wherein the one or more processors are configured to:
generate a first signal upon detecting an unexpected flame within the highly critical zone; and
transmit the first signal to a communication device, wherein the communication device generates an audible information for a user to signal the presence of the unexpected flame within the highly critical zone.

7. The imaging-based flame detection system of claim 5, wherein the one or more processors are configured to:
generate a second signal upon detecting a non-critical flame within the critical zone; and
transmit the second signal to a communication device, wherein the communication device generates a notification for a user to signal the presence of the non-critical flame within the critical zone.

8. The imaging-based flame detection system of claim 4, wherein the one or more processors are configured to:
generate a third signal upon detecting the smoke within the non-critical zone; and
transmit the third signal to a communication device, wherein the communication device generates an audible information for a user to signal the presence of smoke within the non-critical zone.

9. The imaging-based flame detection system of claim 4, wherein the one or more processors are configured to analyze the FOV by evaluating the arrays of pixels of the at least one image capturing device and the one or more sensors to determine the status.

10. The imaging-based flame detection system of claim 4, wherein the at least one image capturing device and the one or more sensors are spatially calibrated to analyze the flame within the FOV of the captured one or more images.

11. The imaging-based flame detection system of claim 1, wherein the one or more processors are configured to re-assign different criticality levels to the one or more zones during an operation of the imaging-based flame detection system.

12. An imaging-based flame detection method comprising:
capturing, via at least one image capturing device, one or more images in a field of view (FOV), wherein each of the one or more images comprises an array of pixels;
analyzing, via one or more sensors, the FOV of the captured one or more images;
receiving, via one or more processors, the one or more captured images;
associating, via the one or more processors, at least a portion of an array of pixels with a corresponding one or more zones;
associating, via the one or more processors, the corresponding one or more zones with a criticality level; and
determining, via the one or more processors, a status based at least on the analyzed FOV of the captured one or more images and the criticality level of the corresponding one or more zones.

13. The imaging-based flame detection method of claim 12, wherein the one or more sensors are one or more infrared (IR) sensors, flame sensors, or photodiodes.

14. The imaging-based flame detection method of claim 12, wherein the criticality level of each respective zone of the one or more zones is non-critical, critical, or highly critical.

15. The imaging-based flame detection method of claim 14, wherein the status indicates presence of a flame or smoke in the corresponding one or more zones.
